(19) Europäisches Patentamt
European Patent Office
Office européen des brevets

(11) **EP 4 757 353 A1**

(12) **EUROPEAN PATENT APPLICATION**

(43) Date of publication:
**10.06.2026 Bulletin 2026/24**

(21) Application number: **25213135.4**

(22) Date of filing: **03.11.2025**

(51) International Patent Classification (IPC):
**H04W 4/029** (2018.01)  *H04W 64/00* (2009.01)
*G01S 19/39* (2010.01)  *G01S 5/02* (2010.01)

(52) Cooperative Patent Classification (CPC):
**H04W 4/029; H04W 64/00;** G01S 5/0244;
G01S 19/396

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **03.12.2024 GB 202417754**

(71) Applicant: **Spatialbuzz Limited
Guildford, Surrey GU1 4HD (GB)**

(72) Inventors:
• **HASLETT, Chris
Guildford, GU1 4HD (GB)**
• **SHAW, Ryan
Guildford, GU1 4HD (GB)**
• **BLAKE, Andrew
Guildford, GU1 4HD (GB)**

(74) Representative: **Bateman, Samuel Alec
Withers & Rogers LLP
2 London Bridge
London SE1 9RA (GB)**

(54) **METHODS OF ESTIMATING LOCATION RELIABILITY**

(57) There is provided a computer-implemented method (300) of calculating a confidence score associated with a historical location estimate of a user equipment, UE. The computer-implemented method is implemented by first software entity. The method comprises retrieving (305) a historical UE location estimate, the historical UE location estimate having been provided by a second software entity, determining (310) whether the historical UE location estimate meets one or more criteria associated with calculating a confidence score, and based on the historical UE location estimate meeting the one or more criteria, calculating (380) a confidence score associated with the historical location estimate of the UE.

Figure 3

**Description**

**Field of the Invention**

The present application relates to a method of calculating a confidence score associated with a location estimate of a user equipment. The present application also relates to an application, or app, configured to perform the method, and to a computer-readable medium.

**Background of the Invention**

It is important for communications network operators to assess their network coverage in order to ensure the proper performance and robustness of the communications network throughout the coverage area of the network. One way network operators assess network coverage is via "drive testing", whereby an operator travels around a given area (often in a vehicle) and records network performance data for that location. However, drive testing is resource-intensive and expensive, and is only capable of assessing network coverage at the time that the operator is recording network performance data in the given area. As a result, poor coverage or faults on the network, including recurrent faults, may go unnoticed or unidentified, negatively affecting the performance and/or robustness of the network.

Another way network operators assess their network coverage is via the installation of network operator apps onto user devices which, from a network operator's perspective, are a crucial source of data regarding how the network is performing (e.g. data indicating whether any faults have or are occurring on the network, or if the network is experiencing degraded or reduced performance). Such network operator apps usually obtain location estimates from the user device on which they are installed, which are reported back to the network operator. However, geolocation as a service on a user device can provide a relatively high drain on the battery of the user device. As a result, restrictions can be placed on the number of location estimates that a network operator app can obtain from a user device over a given period of time, such that location estimates may only be obtained relatively infrequently. Again, this can lead to poor coverage, faults on the network, including recurrent faults, going unnoticed or unidentified, negatively affecting the performance and/or robustness of the network.

It is an aim of the present invention to address one or more of the above disadvantages associated with the prior art.

**Summary of the Invention**

According to a first aspect of the invention, there is provided a computer-implemented method of calculating a confidence score associated with a historical location estimate of a user equipment, UE. The computer-implemented method is implemented by a first software entity. The computer-implemented method comprises: retrieving a historical UE location estimate, the historical UE location estimate having been provided by a second software entity; determining whether the historical UE location estimate meets one or more criteria associated with calculating a confidence score; and based on the historical UE location estimate meeting the one or more criteria, calculating a confidence score associated with the historical location estimate of the UE.

Communication network operators need to understand how their network is operating in order identify if there are any areas of the network that may be operating sub-optimally in order to identify faults or failures on the network. One way of achieving this is by understanding the location of UEs connected to the communications network. However, regularly requesting a UE to provide a UE location estimate causes considerable drain the UE's battery. The claimed invention is implemented on a first software entity (such as an app) that retrieves a UE location estimate that has already been provided by second software entity (such as a different app, or the UE's operating system), rather than the first software entity requesting a UE location update itself. As such, the battery life of the UE can be prolonged.

Optionally, the one or more criteria comprise one or both of a time threshold and a first location accuracy threshold associated with the historical UE location estimate. In this way, any UE location estimates that were obtained a sufficiently long time in the part and/or have a poor location accuracy may be discarded as such UE location estimates may not be sufficiently accurate to be reflective of the performance of the network at a given location to be of use to the network operator.

Optionally, if both of the time threshold and the location accuracy threshold are met, the calculated confidence score is a fixed confidence score. For example, the fixed confidence score may be given a value of 1 (i.e. the historical location estimate is deemed to be 100% accurate, and therefore has the highest level of reliability for use by a network operator in fault determination analysis).

Optionally, if one of the time threshold and the location accuracy threshold is not met, the computer-implemented method further comprises: deriving a first geolocation identifier associated with the historical UE location estimate; obtaining one or more second geolocation identifiers, each second geolocation identifier being associated with a wireless device that is in communication with the UE and is at a known location; and if the first geolocation identifier matches one of the one or more second geolocation identifiers, the calculated confidence score is the fixed confidence score.

In this way, an alternative approach to calculating a confidence score is provided, where if a geolocation identifier (e.g. a quadkey) associated with the historical UE location estimate matches one or more second geolocation identifiers associated with a wireless device at a known location (e.g. a BSSID), the historical UE location estimate may still be deemed to be 100% accurate, and therefore has the highest level of reliability for use by a network operator in fault determination analysis.

Optionally, if the first geolocation identifier does not match one of the one or more second geolocation identifiers, the computer-implemented method further comprises: retrieving one or more cell-site identifiers to which the UE is connected or is visible to the UE; deriving one or more third geolocation identifiers associated with the one or more cell-site identifiers based on the retrieved one or more cell-site identifiers; and if the first geolocation identifier correlates with one of the one or more third geolocation identifiers within a correlation threshold, applying a first weighting factor when calculating the confidence score; or if the first geolocation identifier does not correlate with the one or more third geolocation identifiers within the correlation threshold, applying a second weighting factor when calculating the confidence score, wherein the first weighting factor and the second weighting factor are different.

In this way, the confidence score may be weighted appropriately to reflect the degree to which the historical UE location estimate can be relied upon (e.g. on an accuracy scale ranging from 0-100%) by a network operator in fault determination analysis.

Optionally, if the one or more third geolocation identifiers cannot be derived, the computer-implemented method further comprises: determining whether the historical UE location estimate meets a second location accuracy threshold; and if the historical UE location estimate meets the location accuracy threshold, applying the first weighting factor when calculating the confidence score; or if the historical UE location estimate does not meet the location accuracy threshold, applying the second weighting factor when calculating the confidence score.

In this way, the confidence score may be further weighted appropriately to reflect the degree to which the historical UE location estimate can be relied upon (e.g. on an accuracy scale ranging from 0-100%) by a network operator in fault determination analysis.

Optionally, the first location accuracy threshold is the same as the second location accuracy threshold.

Optionally, the second software entity operates independently of the first software entity. For example, the first software entity may be an app (such as a network operator app), and the second software entity may be a different app to the first software entity or may be an operating system of the UE.

Optionally, the UE comprises location-determining hardware and/or software, and wherein the second software entity retrieves the historical UE location estimate from the location determining hardware and/or software. For example, the second software entity may retrieve the UE location estimate from a GPS receiver and/or GPS software of the UE.

Optionally, the second software entity retrieves the historical UE location estimate from storage on the UE or from an external remote server.

Optionally, the historical UE location estimate is the most recent UE location estimate recorded by the second software entity. In this way, the likelihood of the UE location estimate having a high confidence score (and thereby of having the highest level of reliability for use by a network operator in fault determination analysis) is maximised, compared to historical UE location estimates that were recorded by the second software entity in the more distant past.

Optionally, the one or more criteria comprises an estimated speed of travel of the UE, and wherein the computer-implemented method further comprises calculating the confidence score based on whether the estimated speed of travel of the UE meets a speed threshold. For example, the speed threshold may be set to 45 m/s (approximately 100 mph). If the estimated travel of the UE meets the speed threshold, confidence score can be weighted appropriately to reflect that such relatively high speeds of travel of the UE are unlikely to be indicative of the historical UE location estimate being reliable.

Optionally, the historical location estimate comprises: a first historical location estimate having a first associated timestamp; and a second historical location estimate having a second associated timestamp; and wherein the estimated speed of travel of the UE is calculated based on the first and second historical location estimates and the first and second associated timestamps.

Optionally, if the estimated speed of travel of the UE does not meet the speed threshold, the method further comprises applying the first weighting factor when calculating the confidence score. Optionally, if the estimated speed of travel of the UE meets the speed threshold, the method further comprises applying the second weighting factor when calculating the confidence score, wherein the first weighting factor and the second weighting factor are different. As noted above, the relatively higher speeds of travel of the UE are less likely to be indicative of the historical UE location estimate being reliable, compared with relatively lower speeds of the travel of the UE. As such the confidence score can be weighted appropriately to reflect the degree to which the historical UE location estimate can be relied upon by a network operator in fault determination analysis.

Optionally, the computer-implemented method comprises calculating the confidence score based on a ratio of the first weighting factor and the second weighting factor.

Optionally the estimated speed of travel of the UE is calculated by a source other than the first software entity. Optionally, the computer-implemented method further comprises: retrieving the estimated speed of travel of the UE from a storage of the UE; or determining the estimated speed of travel of the UE.

The estimated speed of travel of the UE can be flexibly retrieved from storage on the UE (thereby prolonging the UE battery life) or can be determined "fresh" (e.g. if no suitable estimated speed of travel of the UE is available from the storage of the UE).

Optionally, the computer-implemented method further comprises periodically clearing a cache of the UE.

Clearing the cache of the UE can be necessary in situations where the location of wireless devices (such as wireless access points) changes over time, for example when an owner of a UE moves home and takes their wireless device with them to their new location. Clearing the cache mitigates the risk of erroneous location reports (e.g. if the wireless device is still registered in the cache as being located at the owner's previous address).

Optionally, the computer-implemented method further comprises reporting the confidence score to a communications network operator.

Optionally, the computer-implemented method further comprises reporting the confidence score to a communications network operator together with the historical UE location estimate.

Optionally, the computer-implemented method further comprises: retrieving historical measurement data indicative of performance of the communications network, the historical measurement data having an associated historical measurement data timestamp; associating the historical measurement data with the historical UE location estimate if the historical measurement data timestamp and a timestamp of the historical UE location estimate fall within a common time range; and reporting the historical measurement data to the communications network operator together with the confidence score and the historical UE location estimate.

In this way, even if a given UE location estimate is not the "most recent" available UE location estimate to the network operator, the UE location estimate may still reliably be used by the network operator as part of determining a historic performance level of the communications network if the given UE location estimate falls within a common time range of the historical network performance data.

Optionally, the first software entity is an app.

According to a second aspect of the invention, there is provided an app configured to perform the computer-implemented method of the first aspect.

According to a third aspect of the invention, there is provided a computer-readable medium comprising instructions that, when executed by a processor, cause the processor to perform the computer-implemented method of the first aspect.

According to a fourth aspect of the invention, there is provided a computer-implemented method of assessing the accuracy of a location estimate of a user equipment, UE, the computer-implemented method comprising: receiving a UE location estimate; receiving a first performance level of a communications network to which the UE is communicatively connected, the first performance level having been measured within a threshold time period of the UE location estimate; receiving a second performance level of the communications network, the second performance level having been measured after the first performance level was measured; and assessing the accuracy of the location estimate of the UE based on a comparison between the first performance level and the second performance level.

By receiving a first performance level of the communications network within a threshold time period of the UE location estimate being received, and comparing the first performance level with a second performance level that has been measured at a later time, an assessment of the accuracy of the UE location estimate can be made. For instance, if the second performance level is substantially different to the first performance level (e.g. if a received signal strength has substantially reduced), then an assessment may be made that the UE location estimate is no longer sufficiently accurate to be relied upon by the network operator. Conversely, if the comparison shows that the first performance level and the second performance level are substantially similar, then it may be deduced that the UE location estimate remains relevant at the current time.

Optionally, the second performance level is measured within a threshold time period of the current time. In this way, the assessment of the accuracy of the location estimate can be made with a greater degree of confidence, compared to, for example, a scenario where a second performance level was received several days after the first performance level was received.

Optionally, the computer-implemented method is implemented by a first software entity, and wherein the UE location estimate is provided by a second software entity. Through the provision of the UE location estimate by the second software entity, the battery life of a UE on which the first software entity executes is extended. For example, the second software entity may be an app that, as part of its normal operation, regularly requests UE location updates. Receiving a UE location estimate from the second software entity obviates the need for the first software entity (which implements the method) to request UE location updates itself, thereby prolonging UE battery life.

Optionally, the second software entity operates independently of the first software entity. For example, the first software entity may be an app, and the second software entity may be a different app to the first software entity or may be an operating system of the UE.

Optionally, the UE comprises location-determining hardware and/or software, and wherein the second software entity retrieves the UE location estimate from the location determining hardware and/or software. For example, the second software entity may retrieve the UE location estimate from a GPS receiver and/or GPS software of the UE.

Optionally, the first performance level is measured using first data received from a first wireless device communicatively connected to the communications network.

Optionally, the first wireless device is located within a threshold distance of the UE location estimate when the first data is provided. In this way, the reliability of the first performance level is improved.

Optionally, the second performance level is measured using second data received from a second wireless device communicatively connected to the communications network.

Optionally, the second wireless device is located within the threshold distance of the UE location estimate when the second data is provided. In this way, the reliability of the second performance level is improved.

Optionally, the first wireless device is one or more of a user equipment, a server, a cell site, an access point, a Bluetooth beacon, or a base-station.

Optionally, the second wireless device is one or more of a user equipment, a server, a cell site, an access point, a Bluetooth beacon, or a base-station.

Optionally, the first wireless device and the second wireless device are the same wireless device.

Optionally, the first data and the second data are one or more of: a signal strength, a transmitting data rate, a receiving data rate, an energy per bit to noise power spectral density ratio, a throughput, a measure of packet-loss, a latency or a bit-error rate.

Optionally, the computer-implemented method further comprises outputting the assessed accuracy of the UE location estimate to the communications network.

According to a fifth aspect of the invention, there is provided an app configured to perform the computer-implemented method of the fourth aspect.

According to a sixth aspect of the invention, there is provided a computer-readable medium comprising instructions that, when executed by a processor, cause the processor to perform the computer-implemented method of the fourth aspect.

According to a seventh aspect of the invention, there is provided a computer-implemented method of assessing a performance of a communications network, the computer-implemented method comprising: receiving a location estimate, the location estimate being associated with a location of a user equipment, UE, communicatively coupled to the communications network; receiving one or more network performance indicators, the one or more network performance indicators each having been measured by the UE and each being associated with the location within the communications network; associating the location estimate with the one or more network performance indicators to form associated data; and assessing the performance of the communications network based on the associated data.

In this way, by associating a location estimate and network performance indicators both associated with a location on the communications network, an informed assessment can be made of an environment that a UE is experiencing.

Optionally, the computer-implemented method is implemented by a first software entity, and wherein the location estimate is provided by a second software entity. Through the provision of the UE location estimate by the second software entity, the battery life of a UE on which the first software entity executes is extended. For example, the second software entity may be an app that, as part of its normal operation, regularly requests UE location updates. Receiving a UE location estimate from the second software entity obviates the need for the first software entity (which implements the method) to request UE location updates itself, thereby prolonging UE battery life.

Optionally, the one or more network performance indicators are provided by the first software entity.

Optionally, the second software entity operates independently of the first software entity. For example, the first software entity may be an app, and the second software entity may be a different app to the first software entity or may be an operating system of the UE

Optionally, the UE comprises location-determining hardware and/or software, and wherein the second software entity retrieves the location estimate from the location determining hardware and/or software. For example, the second software entity may retrieve the UE location estimate from a GPS receiver and/or GPS software of the UE.

Optionally, the first and second software entities operate on different UEs.

Optionally, an assessment of the accuracy of the location within the communications network associated with the location estimate has previously been made. In other words, the accuracy of the location estimate has already been deemed to be sufficiently accurate, improving the efficiency of the method.

Optionally, assessing the performance of the communications network further comprises comparing the associated data to a performance threshold. The performance threshold may be reflective of proper functioning of the communications network. In this way, a network operator can make an assessment as to whether the network if performing optimally, sub-optimally, or if there may be a fault or failure on the network.

Optionally, associating the location estimate with the one or more network performance indicators to form associated data comprises: determining whether the location estimate meets one or more criteria; and based on the location estimate meeting the one or more criteria, associating the location estimate with the one or more network performance indicators.

In this way, location estimates that do not meet the one or more criteria may be discarded from the assessment of the performance of the communications network, thereby improving the accuracy and usefulness of the assessment.

Optionally, the one or more criteria comprise one or more of: a confidence score associated with the location estimate meeting a confidence score threshold; a signal strength associated with the location estimate meeting a signal strength threshold; and a first timestamp associated with the location estimate being within a time threshold of a second timestamp associated with the one or more network performance indicators.

By making an assessment of the performance of the communications network based on location estimates that have met a confidence score threshold (and are thus have been deemed to be sufficiently accurate) allows for a greater degree of confidence that a UE was experiencing a particular network performance at a particular location on the communications network.

The signal strength threshold may indicate a required level of proper functioning of the communications network.

The one or more criteria may additionally or alternatively include whether a first timestamp associated with the location estimate falls within a time threshold of a second timestamp associated with the one or more network performance indicators. For example, the time threshold may be met if the location estimate relates to a location of the UE taken only a few seconds ago and the one or more network performance indicators also relate to the performance of the network a few seconds ago. Similarly, the time threshold may also be met if the location estimate relates to a location of the UE 8 hours ago (for example) and the one or more network performance indicators also relate to the performance of the network 8 hours ago. In these situations, the location estimate may be associated with the one or more network performance indicators and used in the assessment of the performance of the communications network. In other situations, e.g. where the location estimate relates to a location of the UE 8 hours ago (for example), but the one or more performance indicators relate to the performance of the network only a few seconds ago, the time threshold may not be met and the location estimate may not be associated with the network performance indicators because the location estimate and the performance indicators relate to sufficiently different points in time that they may not be reliably associated with each other.

Optionally, the computer-implemented method further comprises outputting the assessed performance of the communications network to a network operator.

According to an eighth aspect of the invention, there is provided an app configured to perform the computer-implemented method of the seventh aspect.

According to a ninth aspect of the invention, there is provided a computer-readable medium comprising instructions that, when executed by a processor, cause the processor to perform the computer-implemented method of the seventh aspect.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

**Brief Description of the Drawings**

The invention will now be described, by way of example only, with reference to the accompanying drawings, in which:

Figure 1 is a schematic representation of a user equipment connected to a communications network;
Figure 2 is a schematic representation of an approach for estimate a geographical location of a user equipment using quadkeys;
Figure 3 is a flowchart illustrating method steps implemented by an application to calculate a confidence score associated with a historical location estimate of a user equipment;
Figures 4 and 5 are flowcharts illustrating a series of parallel method steps that further define the methodology illustrated by Figure 3;
Figure 6 is a flowchart illustrating method steps implemented by an application to assess a location estimate of a user equipment; and
Figure 7 is a flowchart illustrating method steps implemented by an application to assess the performance of a communications network.

**Detailed Description**

User devices in a mobile communications system typically incorporate one or more means of determining their geographical location. Typically, a user device (for example, a smartphone) will incorporate a global positioning satellite (GPS) receiver which is capable of geolocating the user device to within a 10 m radius of an actual location of the user device, provided that the user device is able to receive sufficiently strong signals from an appropriate number of satellites. Likewise, it is possible for a user device to estimate its location based upon, for example, known locations of nearby cell sites, the sector antenna pointing angles of such nearby cell sites, and the signal strengths of signals received by the user device from those antennas. Furthermore, other local sources, such as wireless devices, may provide additional granularity or a supplementary source of location information (for example, when a user device is situated indoors).

Some user device operating systems provide an application programming interface (API) which combines multiple sources of user device location information, in a battery-efficient manner, to supply location information and other related data (for example, a time at which a last location estimate was calculated for a given user device). A specified, or desired, level of service may also be provided, allowing an app running on a user device to pick an appropriate compromise between location accuracy, speed of location update, and battery drain on the user device.

Achieving a low rate of battery drain is of great importance to an app developer. Users are generally concerned with prolonging the battery life of their devices and will suspend or delete apps which, in the user's view, excessively drain the battery, especially if such apps are not seen as essential to their normal day-to-day use of their device. For example, a video-steaming or social networking app may come with an associated high rate of battery drain, but a user may nonetheless view such high rate of battery drain apps as "essential" to their day-to-day use of their device. In contrast, a network operator's own app, which could allow a user to, for example, analyse their recent device data usage, and/or remaining data allocation, or to examine network coverage in their current geographic area, may be viewed as more of a "nice-to-have" and, as such, a user may opt to delete such an app in order to preserve the battery life of their device.

The developers of such network operator apps therefore strive to ensure that battery consumption is as low as possible and, in particular, falls outside of the top-ten user apps when ranked by battery drain. Users can often access such rankings on their device, and may use such rankings as a means to judge which apps to suspend or delete.

From a network operator's perspective, such network operator apps are a crucial source of data, both on how their customers use the network, and also on how their network is performing (e.g. whether faults have occurred on the network, or current/recent network coverage) at any and all coverage locations across their network. Network operators therefore go to great lengths to encourage users to download and utilise such apps, and also to ensure that the "penalty" in doing so, in terms of the rate of battery drain, is as low as possible.

Geolocation, as a service on a user device, and especially the GPS receiver, can provide a relatively high rate of drain on a battery of a user device. Apps which wish to make use of such location services, but which also wish to remain well outside of the "top-ten" user apps by power consumption, may therefore be restricted to obtaining location estimates directly from the user device's resources (e.g. through the GPS of the user device) very infrequently, perhaps only a few times per day. Whilst this infrequent approach to obtaining location estimates is useful in some scenarios and provides a limited amount of crowd-sourced "snapshot" data for the network operator (e.g. signal strength and other quality of service (QoS) parameters that can be reported at known locations), it is not sufficient to replace a network operator's own coverage assessment measurements (sometimes referred to as "drive testing", as discussed above).

In more detail, drive testing is a methodology employed by network operators as a means to assess their network coverage, either across a whole network (e.g. soon after a new network, or a new section of a network, has been deployed), in a specific area following a recent change to the network, or at known locations of poor coverage (e.g. areas reported by users via a network operator's app as having poor coverage or performance). Such testing is also used to assess the accuracy of coverage predictions made by network planning software. However, whilst drive testing can be an effective means of assessing network performance or identifying faults, this approach has a number of drawbacks:

1. Drive testing is resource-intensive and hence expensive. It requires expensive equipment, a dedicated vehicle and at least one operator (to drive the vehicle).
2. Drive testing only assesses network coverage and/or performance at a specific time (i.e. when the drive testing is performed), which may or may not correspond to times when a given area experiences problems, meaning that even recurrent and severe faults on the network may go unnoticed and the robustness of the network becomes compromised.
3. Drive testing only assesses coverage at locations that a vehicle can access. Supplementing vehicle-based drive testing with a "hand-portable" equivalent of "drive-testing" adds further and very significant costs, as the operator now needs to walk around the required coverage area (often either carrying equipment or pushing a trolley of equipment).
4. Drive testing does not generally assess the user's experience of the network, for example with regard to the use of particular apps or usage patterns, and will typically only measure standard network performance metrics (e.g. signal strength, data rate, error rates, etc.).

Separately from drive testing, a network operator may also wish to identify operational problems, or potential faults, in the communications network. For example, such problems may include:

1. Identifying sites/locations where user devices are regularly connected to the "wrong" cell site. These are locations where a user device "should" connect to a local cell site but, for a variety of possible reasons, is instead regularly connecting to a much more distant cell site, resulting in a degraded network performance for that user device (e.g. a poorer signal strength) and an unnecessarily large consumption of network resources, (such as, for example, airtime). This arises because a more distant cell site will need to operate at a lower over-the-air data rate than a local cell site would, such that a given service will then require more air-time to provide the same service, leaving less time or resources for more local user devices, potentially leading to network congestion.

2. Identifying sites where the feeder cables (e.g. coaxial cables) have been connected incorrectly. In such cases, a particular base-station sector, or area, may have been intended to provide coverage to, say, the north of the cell site. However, due to a connection error on the cables feeding the antenna system, it may instead be covering an area to the south-west of the cell-site, resulting in reduced functionality of the network north of the cell site. Therefore, identifying and correcting such cabling errors is important in maintaining good network functionality. Similar errors can also occur, for example, due to mistakes made in entering information into a cell-site database.

3. Conducting "deep dive" investigations into particular (typically small) areas within the wider coverage area of a network where, for example, lower than expected signal strengths are being reported or poor performance is being flagged-up by users (e.g. where the users might be making "coverage checks" using the operator's app, or reporting issues to a call centre). Such analysis may continue over a number of weeks, once remedial work has been undertaken.

In view of the above limitations to drive testing, the present application concerns a system in which network users (more specifically their user devices) undertake the required assessment work through the crowd-sourcing of data from their user devices as they progress around the coverage area of the network. In addition, it is desirable to ensure that such approaches are less likely to result in false and/or insufficient geolocation position data being reported by user devices, and to ensure that the approach achieves a low rate of battery drain. It is also desirable to ensure that the approach works well in locations where underground structures might affect the regularity and/or accuracy of GPS updates (for example in cities with underground railway systems, car parks, underground shopping centres etc.).

Furthermore, the increased use of distributed antenna systems (DAS) to provide coverage in underground railway tunnels and similar environments breaks the usual link between a cell-site's physical location and the location of a user device, as calculated using a signal-strength decay-with-distance model. For example, antennas connected to a base station can be positioned along the length of an underground tunnel. As a result, it is not clear at any given time where in the tunnel a user device is located, and all such locations will typically be reported at the cell-site location (e.g. a station at one or other end of the tunnel). This can, again, lead to wildly erroneous location reports being provided by the user device to the network, since a location can be reported as being at one end of the tunnel when the user emerges from a station at the other end of the tunnel, which may be many hundreds of metres, or even kilometres, away. Therefore, such erroneous reports might be filtered out to improve the overall usefulness of such "crowdsourced" location data provided by the user devices.

In view of this, the approach of the present application includes a determination as to whether an estimate of a location of a user device, or user equipment, UE, at a given time is sufficiently accurate that the estimate could be relied upon by a network operator as part of network performance monitoring operations. Here, a confidence score associated with the estimate of the UE's location can then be calculated, such that a network operator can decide whether the location estimate is sufficiently accurate for use in monitoring the performance of the network.

Throughout the present application, the term "user equipment", UE, will be understood to refer to any suitable electronic device that can connect to a communications network and report its location on request, for example a user handset such as a mobile phone, tablet device, laptop device, or smart watch.

Throughout the present application, it will be understood that references to "wireless devices" may include (and are not limited to) any hubs, routers, and wireless access points, (each of which may operate on the "Wi-Fi" protocol). This term may therefore include any wireless device (fixed or mobile) that is connected to a communications network and operates according to a protocol (such as "Wi-Fi").

In addition, throughout the present application, it will be understood that references to a "communications network" may include (and are not limited to) a telecommunications network, a cellular network, a utility supply network, or any other suitable network over which data can be transferred wirelessly. Similarly, references to receivers, transmitters and transceivers may include (and are not limited to) cellular receivers, transmitters, and transceivers, or any other suitable data receiver, transmitter, and transceiver.

Furthermore, throughout the present application, references to the term "location estimate" or "historical UE location estimate" will be understood to refer to an estimate of a geographic location of a UE, retrieved, for example, from resources of the UE (e.g. GPS). The term "historical UE estimate" will be understood to refer to an estimate of a geographic location that a UE was previously located at. Here, it is highlighted that a historical UE estimate indicating a geographic location that a UE was located at a few seconds ago, and up to a few hours ago, may be considered more useful (and likely to be associated with a higher confidence score, as discussed further below) than a historical UE estimate that is many hours or even a few days old.

Throughout the present application, the term "confidence score" is used to refer to an indication as to whether a location estimate obtained from a UE is an accurate reflection of the UE's true geographical position at a given time. The confidence score may be expressed as a percentage, with a confidence score of 100% indicating the highest confidence that a location estimate obtained from a UE is an accurate reflection of the UE's true geographical position at the time the location estimate, and associated measurement data, was collected, (e.g. by a network operator app).

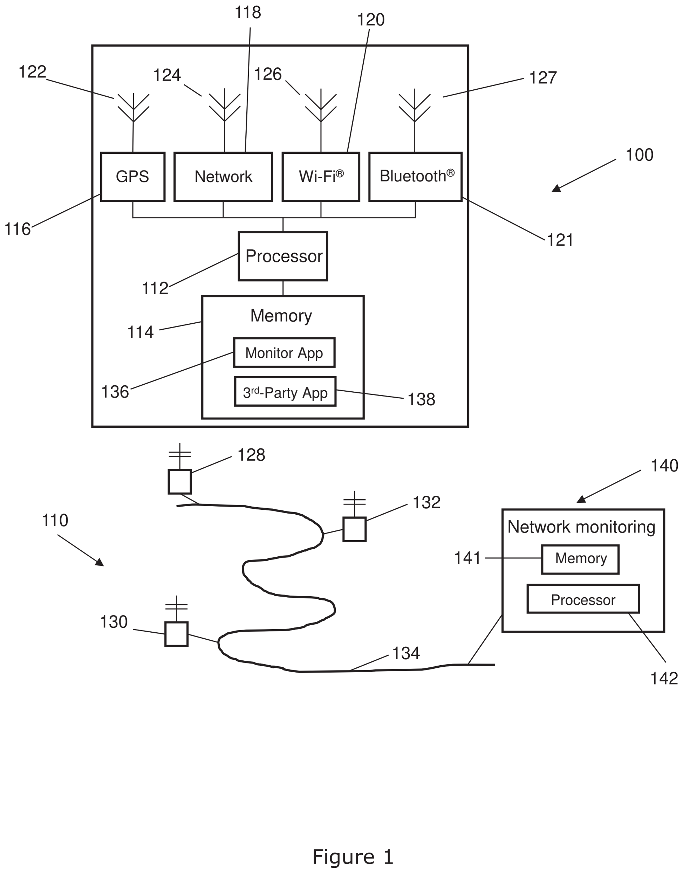

Figure 1 illustrates a user equipment, UE, 100 that is a mobile subscriber device (such as a smartphone, for example) that is operating in a communications network 110. The UE 100 may comprise one or more of a processor 112, a memory 114, a GPS receiver 116, a network transceiver 118, a Wi-Fi transceiver 120, a Bluetooth transceiver 121 and up to four antennas, such as first antenna 122, second antenna 124, third antenna 126, and fourth antenna 127, as shown in the example of Figure 1. In practice, the UE 100 may comprise many other additional elements, though description of these additional elements is not necessary in order to understand the approach as discussed herein with reference to the drawings. As shown, the communications network 110 comprises a plurality of base stations 128, 130, and 132 (also referred to as cell sites) that are interconnected by a backhaul infrastructure 134 (i.e. infrastructure that connects a local or subnetwork(s) to the core network). For clarity, only three base stations 128, 130, and 132 are shown in Figure 1, but it will be understood the communications network 110 may comprise any number of base stations.

The processor 112 may have a degree of control, or may have overall control, of the UE 100 and executes instructions, with the aid of the storage provided by memory 114 to which the processor 112 is operatively coupled, in order to perform such tasks as may be required of the UE 100 by its user and by the operator of the communications network 110. The processor 112 may be operatively coupled to the GPS receiver 116, the network transceiver 118, and the Wi-Fi transceiver 120 in order to control and operate the GPS receiver 116, the network transceiver 118, and the Wi-Fi transceiver 120. In order to perform their respective functions, the GPS receiver 116, the network transceiver 118, and the Wi-Fi transceiver 120 are operatively coupled to one or more of the antennas 122 to 126.

The GPS receiver 116 receives signals from overhead GPS satellites (not shown), mathematically estimates the location of the UE 100 from those signals, and reports the estimated location to the processor 112. Alternatively, or additionally, the processor 112 may estimate the location of the UE 100 based on the signals received from the overhead GPS satellites via the GPS receiver 116.

The network transceiver 118 both transmits communications (e.g. radio, microwave, mm-wave, optical (including Li-Fi), infra-red, etc.) to, and receives communications (e.g. radio, microwave, mm-wave, optical (including Li-Fi), infra-red, etc.) from, the communications network 110. The signals transmitted by the network transceiver 118 may contain data generated by a user of the UE 100 (e.g. through general use of the UE 100 by the user, including message apps and call data, for example) and also signalling data (e.g. control information, measurement information, and the like) that is utilised by the communications network 110 for the purpose of enabling the communications network 110 to at least adequately conduct communications with the UE 100. Similarly, the signals received by the network transceiver 118 may contain data intended for user consumption (e.g. voice-call data, video data, etc.) as well as signalling data for enabling the UE 100 to interact efficiently with the communications network 110.

The Wi-Fi transceiver 120 may be configured to both transmit communications to, and receives communications from, wireless devices (not shown) in the vicinity of the UE 100. The signals transmitted by the Wi-Fi transceiver 120 may contain data generated by the user of the UE 100 (e.g. through general use of the UE 100 by a user, including message apps and call data) and/or signalling data that enables or facilitates communication between the Wi-Fi transceiver 120 and one or more of the wireless devices. Similarly, the signals received by the Wi-Fi transceiver 120 may contain data intended for user consumption (e.g. voice-call data, video data, etc.) as well as signalling data that enables or facilitates communication between the Wi-Fi transceiver 120 and one or more of the wireless devices.

The Bluetooth transceiver 121 may receive communications from Bluetooth beacons (not shown) in the vicinity of the UE 100. Given that Bluetooth typically operates over short distance ranges, communications between the Bluetooth transceiver 121 and Bluetooth beacons can be useful for estimating a location of the UE 100, since the location of Bluetooth beacons are often intentionally known. Bluetooth beacons are commonly used indoors, for example in a store or a museum, to allow users (with the store or museum's app) to be provided with information about the goods on sale or a particular painting or other museum exhibit.

The Bluetooth transceiver 121 may also transmit to, and receive communications from, a nearby UE (e.g. a UE owned by another user). The nearby UE may know its location to a relatively high degree of accuracy, via, for example, regular use of its own GPS receiver. Given that the distance over which Bluetooth transmissions are typically communicated is typically limited to tens of metres or less, by receiving communications from the nearby UE via Bluetooth transceiver 121, the UE 100 may also be able to infer its own location to a relatively high level of accuracy.

The memory 114 may contain programme code for execution by the processor 112 that constitutes an application, or "app" 136 that, at least in part, obtains one or more historical UE location estimates which may have been requested by one or more third-party apps 138 stored on the UE 100. The one or more historical UE location estimates were made by the one or more third-party apps 138, where these third-party apps 138 are otherwise unconnected with the app 136 and operate independently of the app 136.

It will be understood that any references to an "app" throughout this application refers to a software package, such as an application. References to an "app" therefore can, in some instances, be referred to a "means", a "computer program", a "software means", a "software entity", a "data source" or any other suitable terminology for such software packages.

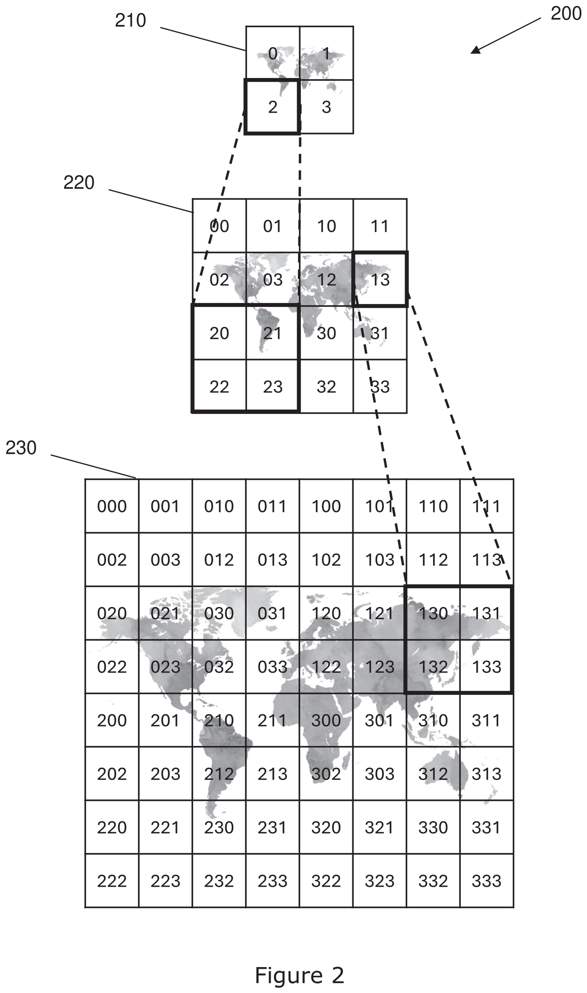

An application programming interface (API) running on an operating system of the UE 100 provides or otherwise makes available the one or more historical UE location estimates (requested by the one or more third-party apps 138 and stored on the UE 100) to the app 136. One example approach for estimating a UE's location is described below with respect to Figure 2. The one or more historical UE location estimates may be used as part of measurements of network performance characteristics on the communications network 110 for the benefit of the operator of the communications network 110. Whilst Figure 1 shows the app 136 being stored on the memory 114 of the UE 100, the app 136 may instead be located on a remote server (not shown) and configured to obtain the one or more historical UE location estimates from the one or more third-party apps 138 stored on the UE 100.

The app 136 determines a confidence score associated with each of the one or more historical UE location estimates and communicates the confidence score for each of the one or more historical location estimates to the operator of the communications network 110 over the communications network 110 via the network transceiver 118. When required, the app 136 also communicates the historical UE location estimate associated with each confidence score to the operator of the communications network 110 via the network transceiver 118. It is useful for the network operator to know to what extent it can rely on a historical UE location estimate when analysing network performance, e.g. when assessing network coverage at particular locations, to seek out and rectify network performance degradation.

The confidence score associated with a historical UE location estimate provided by the app 136 may be transmitted through the communications network 110 via the backhaul infrastructure 134 to a network monitoring system 140. The network monitoring system 140 comprises a memory 141 for storing confidence scores associated with UEs 100 connected to the communications network 110, along with the other associated data retrieved from UEs together with the confidence scores (e.g. a signal strength that a UE 100 was receiving corresponding with the historical UE location estimate for that UE 100, or at the time that the historical UE location estimate was recorded).

The network monitoring system 140 may further comprise a processor 142, which may be configured to process the confidence score, together with the associated data, to identify anomalies in the performance of the communications network 110, which may be indicative of a fault (or a developing fault, as indicated by degraded network performance).

Figure 2 illustrates one illustrative example 200 approach for estimating a UE's geographical location involving the use of quadkeys. A quadkey (also referred to as a quadtree key) is a mechanism for describing the location of a point anywhere on the Earth's surface, to a chosen degree of resolution, by means of a numerical identifier. Quadkeys encode a square region in latitude and longitude space of the surface of the Earth and are made up of a plurality of levels 210, 220, 230, where each successive level, as defined by the preceding level, defines a smaller area of Earth's surface than that preceding level. That is to say, at a first level 210, the whole mappable surface of the Earth is divided into four quadkeys, each with a single-digit code (0, 1, 2 and 3). By zooming in to a second level 220, each of the four original quadkeys in the first level 210 splits into a further four quadkeys, and another digit is added to the code (e.g. the 2 quadkey would split into further 20, 21, 22 and 23 quadkeys, as indicated in Figure 2). As will be appreciated, by iteratively "zooming in" (e.g. to a third level 230, and beyond), further granularity as to a UE's geolocation may be obtained.

It will be appreciated that quadkeys are only presented as one example for describing the location of a point on the Earth's surface. Other examples include latitude/longitude values (which can include the use of four latitude/longitude values signifying the vertices of a "box" within which the UE 100 is located), or national grid reference identifiers (such as, for example, the Ordinance Survey National Grid reference system). Essentially, any suitable system of describing a location on the Earth's surface that a computer could interpret may be used to describe a location of the UE 100.

According to some embodiments, an approach to calculating a confidence score associated with a historical location estimate of a UE 100 is provided. The approach may be implemented by an app 136, which calculates the confidence score to better reflect the likelihood of the corresponding historical location estimate of the UE being correct at a point in time at which the historical location estimate was requested by, or reported to, a network or network operator's management and maintenance system. In some embodiments, the calculation of the confidence score may alternatively be performed by an external system (i.e. separate to the app 136). In general, the approach to calculating the confidence score described herein may be performed by any suitable entity, including, but not limited to, a UE, an app, a server, a network operator's computing system, etc.

The level of confidence score for a recent historical location estimate (i.e. how accurate a particular historical location estimate is deemed to be) required by the network operator will vary depending on the application for which the resulting, or "associated", data will be used. The "associated data" may alternatively be referred to as data associated with a network performance level, which may be provided by a third-party app 138, or may be measured by the UE 100.

Examples of "associated data" may include (but are not limited to):

- Received signal strength indicator (RSSI)
- Energy per bit to noise power spectral density ratio (Eb/N0)
- Signal-to-noise ratio (SNR)
- Data-rate
- Throughput
- Quality of Service (QoS) parameters
- Packet-loss
- Latency
- Bit-error rate.

As an example, in the case of a local investigation of signal quality issues close to a specific cell-site, a high-degree of confidence may be required (e.g. 80%, 90%, or 100% confidence), since any data arising from outside of an analysis area, but which is being reported as coming from within the analysis area, will adversely affect the results of the analysis and may lead to inaccurate conclusions or delays in diagnosing an issue with a cell-site.

Similarly, an analysis covering a wide area might be required to answer the question: "what is the average signal strength experienced within the county of Surrey in the UK?". Such an analysis might be less demanding of location accuracy, and hence it may be acceptable to for confidence scores, and the data associated with the corresponding location estimates, to be (significantly) lower than that needed in the above example for a specific cell-site.

The method may take advantage of the many sensors and other sources of information which are commonly built into many UEs (such as, for example, smartphones). Examples include (but are not limited to):

- A GPS receiver, which can provide highly-accurate (<10 metre error) location estimates where a sufficient number of GPS satellites are "visible" (i.e. can receive signals from) to the receiver's antenna(s).
- A real-time clock, which provide an indication of a time at which a location estimate was derived.
- A Wi-Fi transceiver and an associated list of "visible" (i.e. can receive signals from) Wi-Fi networks (including their geographic locations).
- A cell ID list showing all cells which the UE can "see" (i.e. can receive signals from) along with relevant parameters for those to which the UE is connected or from which the UE receives periodic updates. Relevant parameters may include, but are not limited to, those listed above (RSSI, etc.).
- A Bluetooth transceiver capable of receiving signals from Bluetooth beacons and other local Bluetooth devices, the locations of which are known to either the UE, its operating system (e.g. the "Android" operating system), or the network operator.
- Radio parameter measurements, both those conducted by the UE and those reported to the UE by the network.
- Calculated direction of travel of the UE.
- Calculated velocity (speed).

The app 136 may take advantage of the fact that many other apps 138, which are commonly used by users of portable UEs 100, rely upon location information and hence regular historical UE location updates are available to the app 136 without the app 136 having to request fresh location data on a regular basis. For example, Google Maps requests regular position updates in order to provide users with navigation services. Based upon the widespread use of this and other "location-hungry" apps, location updates may typically be provided, for example, every 90 seconds, which is far more frequent compared to an "operator" app (as described above) which may be limited to 20 or fewer (fresh, app-initiated) updates per day (where such a limitation may be as a consequence of wanting to ensure that the operator app appears outside of the top-ten apps in a battery-usage ranking table).

This increase in the location update frequency is a significant benefit since, owing to the increased location update frequency, the likelihood that a given retrieved historical location estimate is the current location of the UE is increased compared to the more limited number of updates offered by, for example, the network operator app. As such, this is a unique enabler in allowing the proposed approach, via crowdsourcing of signal quality data, to become a realistic methodology for an operator as a replacement/complementary approach to existing drive-testing approaches.

In some embodiments, the app 136 can request either current or historical location estimates of the location of the UE 100. Specific location-related commands that, for example, lead to:

1. The return of a location estimate obtained the last time any other app 138 requested a UE location estimate. This approach will not increase the drain rate on the battery of the UE (i.e. power consumption is improved), since any geolocation hardware on the UE (e.g. the GPS receiver) is not activated, nor are any geolocation computations required. This approach does, however, run the risk that the location estimate provided may be significantly "out of date".

2. The return of a current, on demand, location estimate by activating geolocation hardware on the UE 100. This approach has the advantage of returning an up-to-date location estimate, if one can be obtained (e.g. if a sufficient number of GPS satellites are "visible" to the UE and/or one or more wireless devices are within range of the UE, and/or a cell-site is connected to the UE). However, by activating geolocation hardware on the UE 100, this increases the rate of power consumption by the UE 100.

3. The return of periodic, automated or semi-automated, updates of location estimates (e.g. causing a notification to be issued as and when a change in location occurs) by activating geolocation hardware on the UE 100 which, as above, does increase the rate of power consumption. In particular, following this approach can potentially consume large amounts of power if location data is not available, or if the request for historical location estimates obtained by other apps 138 on the UE 100 is not stopped correctly after obtaining a fresh location estimate.

Given that an aim of the present invention is to prolong battery life on the UE 100, using the first of these approaches discussed above, or a near-equivalent command, is the optimum choice from the perspective of minimising the rate of battery consumption, however it is also the least likely to return a valid, up-to-date, location estimate. The app 136 may use the first approach in order to obtain a UE location estimate provided by another (e.g. third-party) app 138, and then calculate an associated confidence score to better reflect the likelihood of the UE location estimate received from that other app 138 being sufficiently accurate to be of use to a network operator in network performance management/assessment and fault identification.

In some embodiments, the app 136 may compare a historical UE location estimate obtained from another third-party app 138 (or external computing system/server) against certain criteria to help determine the confidence score to associate with that historical UE estimate. For example, the app 136 may check if the historical UE location estimate was obtained recently (e.g. less than 10 seconds ago, less than 30 seconds ago, or any other suitable time period), or if a location accuracy received from the other third-party app 138 and associated with the historical UE location estimate is below a given threshold (e.g. less than 50 metres, less than 100 metres, or any other suitable distance etc.). In the event that the historical UE location estimate meets one or more of these criteria, then the historical UE location estimate can be deemed to be sufficiently accurate that a network operator could rely upon the historical UE location estimate when performing network diagnostics, and the app 136 will therefore report a high confidence score associated with the historical UE location estimate.

If, however, the historical UE location estimate does not meet one or more of the above-mentioned criteria, in some embodiments the app 136 is configured to perform further analysis in order to calculate the confidence score. For example, the app 136 may determine a geolocation identifier (such as a quadkey, as described above) associated with the historical UE location estimate and check if the geolocation identifier matches one or more geolocation identifiers stored in a database.

In some embodiments, the app 136 may additionally or alternatively determine an estimated speed of travel of the UE 100 (for example, using data provided by sensors on the UE 100, such as accelerometers, or data provided by other third-party apps 138) as part of calculating the confidence score. If the estimated speed of the UE 100 is determined to be above a predetermined speed threshold (e.g. above a certain speed, which may be predetermined), the estimated speed of the UE 100 may be determined to be sufficiently high that the confidence score associated with the historical UE location estimate (which was recorded when the UE 100 was travelling at that estimated speed) is calculated to be low. For example, if the UE 100 is onboard a moving train, a historical UE location estimate received from a third-party app 138 may quickly become out of date and unreliable. Likewise, if a calculated estimated speed, based upon two or more historical location estimates and the timestamps associated with those location estimates, exceeds a speed which is likely to be achievable in the locality in which the location estimates place the UE, and at the time at which the estimates are provided, then one or more of the location estimates may be assigned a low, or potentially a zero, confidence score. For example, if the calculated estimated speed in a city centre at a time during the business day is calculated to be 45m/s, then it is likely that the calculation is based upon a spurious or erroneous historical location estimate, since such speeds are very unlikely to be achieved in such a scenario.

In some embodiments, the historical UE location estimate received from a third-party app 138 may be a most-recent location estimate recorded by that third-party app. The app 136 may either receive (e.g. indirectly via an API running on the operating system of the UE 100) all UE location estimates recorded by the third-party app 138 within a specified time window and select the most recent UE location estimate, or the app 136 may directly (e.g. via a specific command) request the most recent UE location estimate recorded by the third-party app 138.

In some embodiments, the app 136 may receive a prior historical UE location estimate (i.e. a historical UE location estimate that was recorded prior to the most recently recorded UE location estimate) having an associated confidence score above a predetermined confidence score threshold (in other words, a prior historical UE location estimate determined to be sufficiently accurate, as described in more detail below) together with a time at which the prior historical UE location estimate was recorded. The associated confidence score may have been calculated by the app 136 previously or may have been calculated elsewhere and stored together with the prior historical UE location estimate for retrieval by the app 136. To determine the estimated speed of travel of the UE 100, the app 136 determines a distance between the prior historical UE location estimate and the historical UE location estimate, and divides this by a difference between a time at which the prior historical UE location estimate and the historical UE location estimate were recorded. The historical UE location estimate is a UE location estimate obtained more recently than the prior historical UE location estimate. For example, in some embodiments, the historical UE location estimate may be a most-recent historical UE location estimate.

As noted above, if the estimated speed of the UE 100 is determined to be above the estimated speed threshold, the confidence score associated with the historical UE location estimate is low, and vice versa. An example process for calculating a confidence score associated with a historical UE location estimate will now be described in more detail.

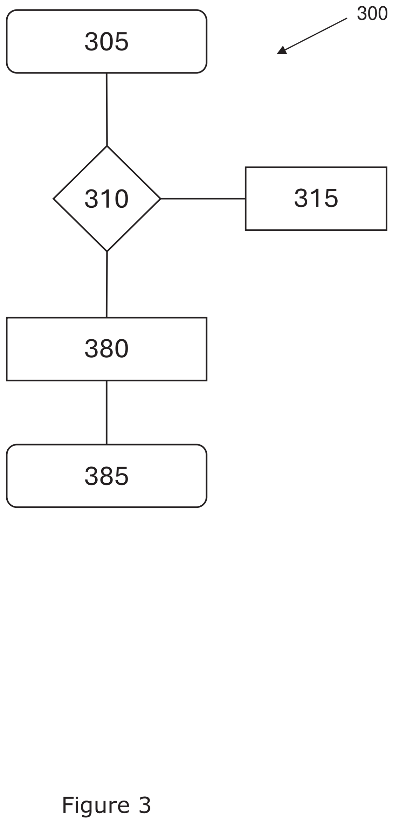

Figure 3 is a flowchart of a method 300 according to some embodiments. The method 300 includes steps implemented by an application or "software entity", (i.e. the app 136 discussed above), to calculate a confidence score associated with a historical location estimate of a user equipment, or UE 100. The confidence score reflects the likelihood of the first historical location estimate being sufficiently accurate to be of use to a network operator (e.g. in determining the presence of potential faults and/or performance degradation on the communications network).

At step 305, a first historical location estimate 250 of the UE 100 is obtained. The first historical location estimate 250 is provided by a data source (or "software entity") other than the app 136 (such as a third-party app 138, or the UE's operating system which has maintained a record of location estimates previously requested by apps running on the UE). For example, in some embodiments the first historical location estimate 250 may be provided by a different app or process on the UE, or may be provided by a system external to the UE (e.g. an external computing system or server). The app 136 may first request the first historical location estimate 250 from the data source (e.g. the UE's operating system, which makes historical UE location estimates made by third-party apps 138 available to the UE 100 via an API), or the data source may provide the app 136 with the first historical location estimate 250 without having first been requested by the app 136. For example, the app 136 may collect the first historical location estimate 250 without "requesting" the first historical location estimate 250 by reading a memory location(s) on the UE 100 at which the first historical location estimate 250 is stored (together with other historical location estimates). In some examples, a subroutine of the operating system of the UE 100 is called by the app 136, and this subroutine returns one or more historical location estimates, together each with a timestamp associated with that historical location estimate.

In some embodiments, the first historical UE location estimate may be an estimate of the geolocation (i.e. the location of the UE 100 on the Earth's surface) of the UE 100 that was most recently recorded by the UE 100 (or external computing system/server) prior to step 305. It will be understood that the "first historical location estimate" may alternatively be referred to as the "location estimate", "first location estimate", or the "most recent location estimate", or MRLE.

In some embodiments, the first historical location UE estimate 250 may be obtained from a storage medium on the UE 100, or from an external computing system or server. For example, by using a command, as described above, to retrieve a historical location estimate from storage on the UE 100. While it is not essential for the retrieved historical UE location estimate to be the most recent location estimate mentioned above, the location estimate associated with the retrieved historical UE location estimate must have been recorded sufficiently recently to be of use to the network operator. For example, a UE location estimate recorded only a few seconds ago may be more useful than a UE location estimate recorded an hour ago (by which time, the UE may have moved out of the coverage area provided by the network operator).

The method proceeds to step 310, in which the first historical location estimate 250 is compared against one or more criteria, including a first time-threshold and/or a first location accuracy threshold. For example, the first time-threshold may be whether the first historical location estimate 250 was made less than 10 seconds ago, less than 30 seconds ago, or within any suitable recent time period. The first location accuracy threshold may be whether an accuracy estimate associated with the first historical location estimate 250 is less than 100 metres, or less than 50 metres, or within any other suitable distance.

If one of the one or more criteria are met in step 310, the method 300 proceeds directly to step 380, in which a confidence score associated with the first historical location estimate 250 is calculated. The confidence score may be calculated by the app 136 itself, however, in some embodiments, the confidence score may be calculated by an external system as mentioned above. As an example, if at least one of the one or more criteria are met (e.g. the first historical location estimate 250 was made less than 10 seconds ago and/or the accuracy estimate associated with the first historical location estimate 250 is less than 100 metres), then the first historical location estimate 250 is assigned a fixed confidence score of 1 (i.e. the first historical location estimate 250 is deemed to be 100% accurate).

In other words, in this example scenario, if the first historical location estimate 250 was made less than 10 seconds ago, and/or the accuracy estimate associated with the first historical location estimate 250 is less than 100 metres, then the first historical location estimate 250 is deemed to be sufficiently reliable for subsequent use by a network operator in fault determination analysis (i.e. the confidence score is calculated, or set, to be 100%).

The method 300 may then proceed to step 385, in which the confidence score is reported to, or made available for retrieval by, the network operator via resources available to the network, and provided via the network. The first historical location estimate 250 may also be reported together with the calculated confidence score. In addition, the UE 100 may also report measurement data pertaining to the reported location. Such measurement data may include, for example, signal strength data, bit-error rates, data rates, throughput, and/or any other data measured by the UE 100 which may be of interest to the network operator.

Optionally, the UE 100 may also store historical measurement data indicative of network conditions at a given time, along with an associated timestamp indicating the time at which the historical measurement data was recorded. This historical measurement data may then be associated with a UE location estimate, based upon the timestamp of each of the historical measurement data and the UE location estimate. For example, if a recent UE location estimate was requested by a third-party app 138 ten minutes ago, at 12:00, the app 136 could interrogate the data source (e.g. the UE's operating system, or the third-party app 138) to find any measurement data that was also taken at 12:00. The app 136 may then report both the historical UE location (e.g. requested at 12:00) and the associated recent historical measurement data. This approach allows measurement data to accurately represent the network conditions at the reported location.

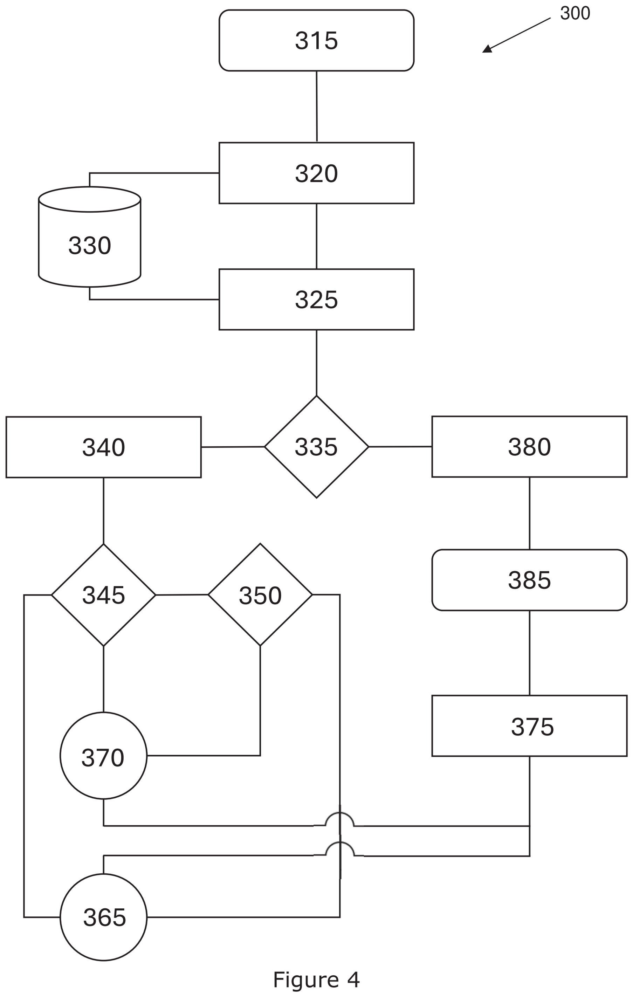

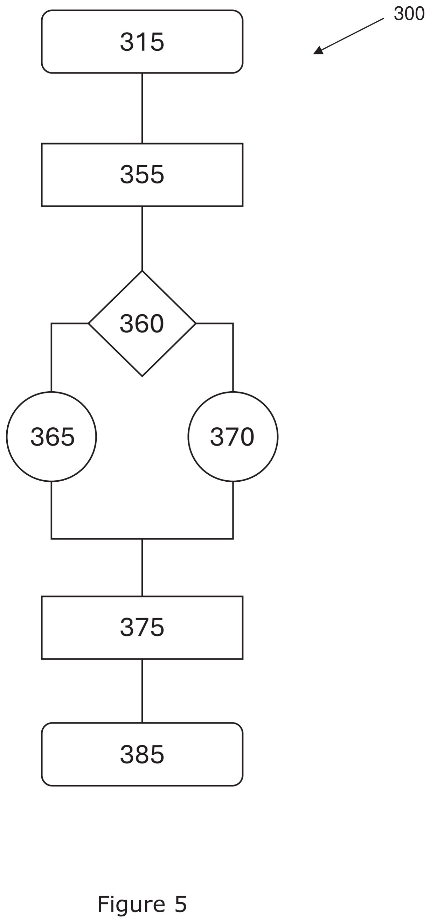

If, however, neither of the one or more criteria are met in step 310, i.e. if the first historical location estimate 250 was made 10 seconds or more ago and the associated accuracy estimate is 100 metres or more, then the method proceeds to step 315, at which point the method separates into two parallel paths, as described in more detail below in connection with Figures 4 and 5. In Figure 4, parallel path #1 is indicated by dashed box 400. In Figure 5, parallel path #2 is indicated by dashed box 500.

Parallel Path #1

Figure 4 is a flowchart illustrating the steps that the method 300 follows for the first parallel path 400 (referred to as parallel path #1) of the two parallel paths mentioned above. For parallel path #1, step 315 continues to step 320 in which a first geolocation identifier 260 (such as a quadkey, for example, as discussed above) associated with the first historical location estimate 250 of the UE retrieved at step 305 is derived, based upon data stored in a geolocation identifier database 330. For example, in some embodiments the first geolocation identifier 260 may be a quadkey (as described above in relation to Figure 2) and the first geolocation identifier database 330 may be a quadkey database. In this example, an algorithm may take, at its input, a pair of latitude and longitude values and a desired quadkey resolution, and output a quadkey having the desired resolution. The algorithm may be executed on the UE 100, or on a separate computer system or server (e.g. located on the premises of the network operator).

The method 300 then moves to step 325, in which one or more second geolocation identifiers 270 are obtained from the geolocation identifier database at step 330. The one or more second geolocation identifiers 270 may each be associated with a latitude/longitude location of a nearby wireless device (identified, for example, by a broadcast basic service set identifier (BSSID), or Bluetooth beacon identifier), and are determined based upon data stored in the geolocation identifier database 330. The latitude/longitude location of a known wireless device may be derived from a stored table of known BSSIDs for wireless devices and their associated known or estimated locations.

In the event that multiple wireless devices are "visible" to the UE 100 (e.g. wireless devices that the UE may communicate with), at a given location, a second geolocation identifier 270 may be derived for the wireless device likely to be closest to the UE 100, based, for example, upon a signal strength received by the UE 100 from the wireless device. Alternatively, in some embodiments, the second geolocation identifier 270 may be based upon a location accuracy of the "known" location of the wireless device, or upon any other criteria. Equally, a second geolocation identifier 270 may be determined for a subset of, or all, wireless devices which are "visible" to the UE 100 and a list of first geolocation identifiers 260, associated with the first historical location estimate 250 of the UE 100, may be compiled for comparison in step 335. Continuing the example above, in some embodiments the second geolocation identifier 270 may also be a quadkey associated with the latitude/longitude location of a nearby wireless device. As above, an algorithm may take, at its input, a pair of latitude and longitude values and a desired quadkey resolution, and output a quadkey having the desired resolution. The algorithm may be executed on the UE 100, or on a separate computer system or server (e.g. located on the premises of the network operator).

A location accuracy of the "known" location of the wireless device may be determined based upon crowd-sourced data obtained from other users of the communications network who have location services enabled on their UEs and who are both in range of the wireless device (and hence can report a signal strength of the wireless device) and report GPS data that may be used to determine the location accuracy of the wireless device. Alternatively, or additionally, the location accuracy of the "known" location of the wireless device may be determined based on a comparison of the IP address of the wireless device with IP addresses stored in an IP address database that correspond to physical addresses.

At step 335, some or all of the second geolocation identifiers 270 identified in step 325 as being associated with local wireless devices are compared to the first geolocation identifier 260 which was determined in step 320 as being associated with the first historical location estimate 250.

If the first geolocation identifier 260, associated with first historical location estimate 250 of the UE 100, matches one or more of the second geolocation identifiers 270 associated with the BSSIDs which are "visible" to the UE 100, then the method moves directly to step 380. By "matches", it is meant that a correlation between the first geolocation identifier 260 and one or more of the second geolocation identifier 270 meets a first correlation threshold (e.g. the first geolocation identifier 260 and one or more of the second geolocation identifiers 270 relate substantially to the same geolocation, to within an acceptable degree of error, which may be predetermined).

As noted above, step 380 associates a confidence score of 1 with the first historical location estimate 250 (i.e. the first historical location estimate 250 is deemed to be accurate to a confidence of 100%, and therefore has the highest level of reliability for use by a network operator in fault determination analysis). The confidence score may then, at step 385, be reported to, or made available for retrieval by, the network operator via resources available to the communications network and provided via the communications network. As previously mentioned, the first historical location estimate 250 may also be reported together with the calculated confidence score, and may also be reported together with any associated measurement data taken by the UE 100 at either the time of request by the network operator or at the time at which the first historical location estimate 250 was originally taken by the third-party app 138, if such data is available from the UE 100.

If, on the other hand, there is no match between a second geolocation identifier 270 associated with the BSSID and the first geolocation identifier 260 associated with the first historical location estimate 250 made by the UE 100, or the match is considered below the first correlation threshold (e.g. they are determined to not relate substantially to the same geolocation), then the method moves to step 340.

In step 340 and step 345, a similar assessment is made to that described above for BSSIDs (or Bluetooth beacon identifiers) and their associated second geolocation identifier(s) 270, except in this instance, a cell-site ID(s) for the cell-site(s) to which the UE 100 is connected, or which are visible to the UE, are used to calculate one or more third geolocation identifiers 280. A comparison is then made at step 345 between the one or more third geolocation identifiers 280 and the first geolocation identifier 260 associated with the first historical location estimate 250 of the UE 100.

If the result of the comparison(s) made in step 345 is positive, i.e. if there is deemed to be a match between the first geolocation identifier 260 and that of one or more of the third geolocation identifiers 280 in the list of third geolocation identifiers associated with cell-sites which are visible to the UE 100, (e.g. they are deemed to meet a second correlation threshold to within an acceptable degree of error, which may be predetermined), then a first weighting is assigned for use in step 375 and the method moves to step 365. In some embodiments, the first weighting may be expressed as a "Yes" weight of 1 (one). Meeting the second correlation threshold can be interpreted as the first geolocation identifier 260 and one or more of the third geolocation identifiers 280 indicating substantially the same geolocation. Alternatively, if the match does not meet the second correlation threshold, (e.g. is therefore deemed to be too "weak"), then a second weighting is assigned for use in step 375 and the method moves to step 370. In some embodiments, the second weighting may expressed as a "No" weight of 1 (one).

If, in step 345, there are found to be no relevant third geolocation identifiers 280, (which, for example, may be because the UE 100 is in a poor coverage area and hence is temporarily disconnected from the communications network), then the method moves to step 350.

In step 350, the first historical location estimate 250 is compared against a second location accuracy threshold. The second location accuracy threshold may relate to whether an accuracy estimate associated with the first historical location estimate 250 is less than 100 metres, for example. If the first historical location accuracy estimate 250 exceeds the second location accuracy threshold, then a "No" weighting of 1 is assigned for use in step 375 and the method passes on to step 370.

Alternatively, if the second location accuracy threshold is not exceeded (e.g. if the first historical location accuracy 250 estimate falls within the second location accuracy threshold, for example is under 100 metres, and is therefore deemed to be sufficiently accurate), then an appropriate weighting (e.g. a "Yes" weighting of 0 (zero)) is assigned for use in step 375 and the method passes on to step 365. Some worked examples for calculating confidence scores at step 375, together with example formulae, are provided below in relation to "parallel path #2".

Parallel Path #2

Figure 5 is a flowchart illustrating the steps that the method 300 follows for the second parallel path 500 (referred to as "parallel path #2") of the two parallel paths mentioned above. For parallel path #2, step 315 leads to step 355 in which an estimate of the speed at which the UE 100 is travelling is calculated based upon the first historical location estimate 250 and a second historical location estimate. The second historical location estimate may be referred to as a "prior location estimate" (PLE) and may be a location estimate that was recorded prior to the first, or more recent, location estimate described above with respect to step 305, that met a given confidence score threshold.

In this example, the first historical location estimate 250 may be a most recent location estimate (MRLE) of the UE 100, where the prior location estimate (PLE) is obtained previously to the MRLE, as alluded to above. In order to accurately calculate an estimate of the speed of the UE 100 (as detailed below), the MRLE selected for use in the UE speed estimate calculation may be a historical location estimate that meets a given confidence score threshold. The MRLE may be a historical location estimate previously obtained by the app 136 and assigned an associated confidence score by the app 136 (and may also have previously been reported to the communications network). Alternatively, the MRLE may be a "fresh" location estimate requested by the app 136 at the time of calculating the estimate of the speed of the UE 100.

Each of the MRLE and the PLE have an associated timestamp. The estimate of the speed at which the UE is travelling may be calculated as follows: UE speed estimate = estimate of the distance travelled by the UE divided by time taken to travel the estimated distance, or, more specifically:

$$UE\ speed = \frac{Estimated\ straight\ line\ distance\ between\ MRLE\ and\ PLE}{MRLE\ timestamp - PLE\ timestamp}$$

It will be understood that the estimate of the UE's speed may be calculated elsewhere on the UE 100, and may therefore be available to the app 136 without the need for the app 136 to calculate an estimate of the UE's 100 speed itself.

The method then passes to step 360 in which the UE speed estimate calculated in step 355 is compared with a first speed threshold. If the calculated UE speed estimate is less than the first speed threshold, then a corresponding weighting (e.g. a "Yes" weight of 1 (one)) is assigned for use in step 375 and the method moves to step 365. For example, in one scenario the first speed threshold may be 45 m/s. If the calculated UE speed estimate meets or exceeds the first speed threshold, then a corresponding weighting (e.g. a "No" weight of 5 (five)) is assigned for use in step 375 and the method moves to step 370. In this example scenario, the high weighting of 5 reflects the fact that speeds of 45 m/s (or approximately 100 mph) or over are very rarely encountered in practice, and hence such values are generally indicative of a low likelihood of a UE location estimate being accurate, and therefore is unlikely to be reliable data for a network operator. Alternatively, the UE 100 being located on a moving train is, however, an example of a scenario where a UE speed of greater than 45 m/s is a credible possibility.

It will be understood that the estimate of the UE speed referred to above may also be an estimated velocity of the UE 100. For example, whilst the estimated speed of the UE 100 is based on an estimated straight-line distance between the MRLE and PLE, if a suitable coordinate system is associated with the MRLE and PLE, then an estimate of the velocity of the UE 100 may additionally or alternatively be calculated.

As an aside, in the event that the UE 100 is switched on after a re-boot (resulting in any stored previous location estimates being lost), the method 300 will follow Parallel Path #1, as there will be no prior historical UE estimate on which to base a UE speed estimate calculation (in effect, the most recent UE location estimate and the prior historical location estimate will be the same UE location estimate).

In steps 365 and 370, the weights derived from preceding steps 345, 350, 360 are combined at their inputs for passing to a calculation which is then performed in step 375.

In step 375, the following calculation is performed to calculate the confidence score associated with a historical location estimate of the UE 100:

$$Confidence\ score = \frac{\sum('Yes'weights)}{(\sum('Yes'\ weights) + \sum('No'\ weights))}$$

Where $\Sigma$ signifies the sum of, or total of, the items in the subsequent brackets. The calculation at step 375 may be performed by the app 136, or by an external source (such as an external server), another app, a UE, a network operator's computing system, etc.

Simply as an aid for understanding the principles discussed herein, a number of worked examples for calculating a confidence score are provided below. It is emphasised that such worked examples are therefore not intended to be in any way limiting:

1. If the result of step 350 is a "No" weight of 1 and the result of step 360 is a "Yes" weight of 1, the calculation would yield a confidence score = 1/[1+1] = 0.5 (or 50%).

2. If the result of step 350 is a "Yes" weight of 0 and the result of step 360 is a "No" weight of 5, the calculation would yield a confidence score = 0/[5+0] = 0 (0%).

3. If the result of step 345 is a "No" weight of 1 and the result of step 360 is a "No" weight of 5, the calculation would yield a confidence score = 0/[1+5] = 0 (0%).

4. If the result of step 345 is a "Yes" weight of 1 and the result of step 360 is a "No" weight of 5, the calculation would yield a confidence score = 1/[1+5] = 0.17 (to 2 decimal places, 17%).

The first historical UE location estimate 250, and the associated confidence score calculated in step 375, may then, in step 385, be reported to, or made available for retrieval by, the network operator via resources available to the operator and provided via the communications network. The method then terminates.

It should be emphasised that a confidence score of less than 100% does not necessarily mean that the relevant historical UE location estimate, and its associated measurement data are of no use to a network operator. For example, the relevant historical UE location estimate and its associated measurement data with a less than 100% confidence score may be of limited or no value to the network operator when investigating a local coverage problem or as a part of a drive-testing evaluation of a communications network, but may however be of use when assessing average signal strengths across a city or a county or in a rural area with few cell-sites. As such, the usefulness of a confidence score calculated for a given historical UE location estimate may depend upon the context for which that UE location estimate is to be used, in addition to the confidence score itself.

It should also be noted that other weightings to the example weightings described above could be assigned to the various appropriate steps of the method and further granularity could be applied to the various stages. For example, the estimated "speed" test could include different speed thresholds (compared to the 45 m/s first speed threshold example outlined above) and different associated weightings. Likewise, a large number of BSSIDs or cell-site IDs which matched, or were appropriately close to, the first geolocation identifier 260 (e.g. quadkey square) in which the UE 100 is reportedly located, could be used to enhance the granularity of the confidence score.

In some embodiments, there is a further step (not shown) which may form a part of the method 300 performed by app. It may sometimes be necessary to clear a cache of the UE 100, for example, BSSIDs and their associated locations periodically, thereby forcing the app 136 to download a new cache. This can be necessary when the location of wireless devices (e.g. Wi-Fi access points, for example) change over time, such as would occur when the owner of the UE 100 moves house and (not unnaturally) takes their wireless device with them to their new location. If the wireless device is still registered, in the cache, as being located at the old address, then this can obviously lead to significant location errors if not corrected, or to perfectly valid location reports being rejected unnecessarily. The periodic clearing of a UE's 100 cache may occur once per week, for example.

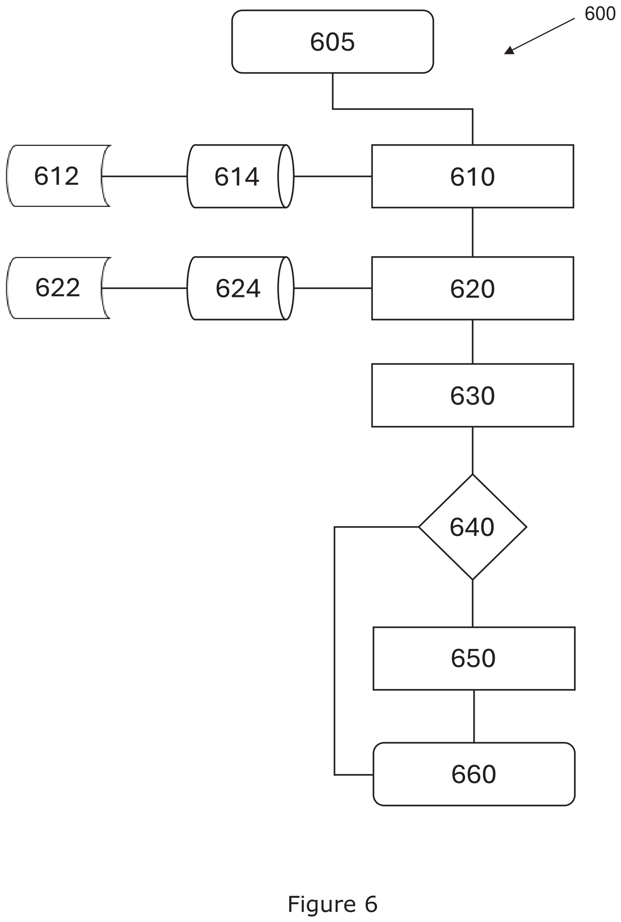

In further embodiments, an approach for assessing the accuracy of a UE location estimate is provided, where the assessment is based upon an environment (e.g. a level of network performance) that the UE 100 was experiencing at the same time that the UE location estimate was recorded, as illustrated by the flowchart 600 of Figure 6.

In some embodiments, this assessment (or "validation"), beginning at step 605, is implemented by the app 136 (which, in some embodiments, may also be referred to as a "first software entity"). At step 610, the app 136 receives a UE location estimate 612. The app 136 may communicate with a second software entity (or "data source") to obtain an estimate 612 of the UE's location made or provided by the second software entity, instead of the app 136 recording a UE location estimate itself. In some embodiments, the second software entity may operate independently of the app 136, and may be a third-party app 138 or the UE's operating system (for example the Android operating system). Estimates of the UE's location (e.g. provided by third-party apps that operate independently of the app 136, such as third-party app 138) may be stored in a database 614, and the app 136 may retrieve the UE location estimate 612 from the database 614. The third-party app 138 may retrieve the UE location estimate 612 from location-determining hardware and/or software (e.g. GPS) running on the UE 100 before storing the UE location estimate 612 in the database 614, or otherwise makes the UE location estimate 612 available to the app 136.

At step 620, the app 136 receives a first performance level relating to the performance of the communications network, the first performance level having been measured within a threshold time period of the UE location estimate 612 (e.g. within a given time period prior to or after the UE location estimate 612). The first performance level may be measured using one or more data signals 622 provided by a wireless device communicatively connected to the communications network. The wireless device may be, for example, a user equipment, server, cell site, Wi-Fi access point, base-station, Bluetooth beacon, etc.

The one or more data signals 622 may be stored in a database 624 of locally sourced data signals, and the app 136 may obtain the one or more data signals 622 from the database 624. The one or more data signals 622 may be objective data measurements indicating the first performance level of the communications network that correspond with (i.e. were recorded within the threshold time period of) the estimate 612 of the UE's location obtained at step 610. By "within a threshold time period", we mean that the one or more first data signals 622 were recorded at such a time that they remain sufficiently relevant to the UE location estimate so as to be suitable for assessing the accuracy of the UE location estimate. The wireless device may also be located within a threshold distance of the UE location estimate 612 at a time when the one or more data signals 622 (indicating that first performance level) are provided by/obtained from that wireless device. The one or more data signals 622 may be one or more of a signal strength (e.g. as reported by a Wi-Fi access point), a transmitting data rate, a receiving data rate, an energy per bit to noise power spectral density ratio, a throughput, a measure of packet-loss, a latency, a bit-error rate, etc.

At step 630, the app 136 receives a second performance level of the communications network, where the second performance level was measured after the first performance level was measured. The second performance level may be measured using one or more data signals provided by a wireless device (which may be the same wireless device that measured the first performance level) communicatively connected to the communications network. The wireless device providing the data signals indicative of the second performance level may be a user equipment, server, cell site, access point, base-station, Bluetooth beacon, etc, that the app 136 may be in communication with. The wireless device may also be located within a threshold distance of the UE location estimate 612 at a time when the one or more data signals (indicating that second performance level) are provided by/obtained from that wireless device.

The second performance level may be a "current" performance level of the communications network. By "current", it is meant that the one or more data signals indicative of the second performance level relate to objective network performance measurements taken after the one or more data signals indicative of the first performance level. For example, the second performance level may relate to network performance measurements recorded within a threshold time period of the app 136 instigating the assessment at step 605. The one or more data signals used to derive the second performance level may be one or more of a signal strength (e.g. as reported by a Wi-Fi access point), a transmitting data rate, a receiving data rate, an energy per bit to noise power spectral density ratio, a throughput, a measure of packet-loss, a latency, a bit-error rate, etc.

At step 640, the app 136 compares the one or more data signals relating to the second ("current") performance level of the communications network with corresponding data signals 622, relating to the first performance level of the communications network received at the time when the UE location estimate was obtained, to assess whether the UE location estimate remains currently accurate (i.e. at the present time). For example, if a given data signal indicative of the second performance level is comparable with a corresponding data signal 622 indicative of the first performance level (e.g. the values fall within a comparison threshold distance of each other), the app 136 proceeds to step 650 at which the UE location estimate is outputted, reported to, or otherwise made available for retrieval by, the network operator. The method then terminates at step 660.

If, at step 640, the comparison determines that the given data signal indicative of the second performance level is not comparable with the corresponding data signal 622 indicative of the first performance level (e.g. the values do not fall within the comparison threshold distance of each other), the app 136 proceeds straight to step 660, at which the method terminates, and the UE location estimate 612 is not outputted, reported to, or otherwise made available for retrieval by, the network operator.

Whilst the approach for assessing the accuracy of a UE location estimate has been described above as being implemented by the app 136, it should be understood that the approach described above (including individual aspects thereof) may be performed by any suitable entity, including, but not limited to, a UE, an app, a server, a network operator's computing system, etc.

Whilst the approach described in relation to Figure 6 may optionally incorporate the calculation of a confidence score associated with the UE location estimate 612 in a manner similar to that described in detail above, this is not necessary. Instead, as described above, the approach of Figure 6 may include, as an example, a thresholding of a signal strength received from a wireless device. For example, if a given Wi-Fi "Conference Room" wireless device within a building is reporting a signal strength of > - 75 dBm, a UE location estimate indicating that the UE 100 is outside of the building is more likely to be valid than not.

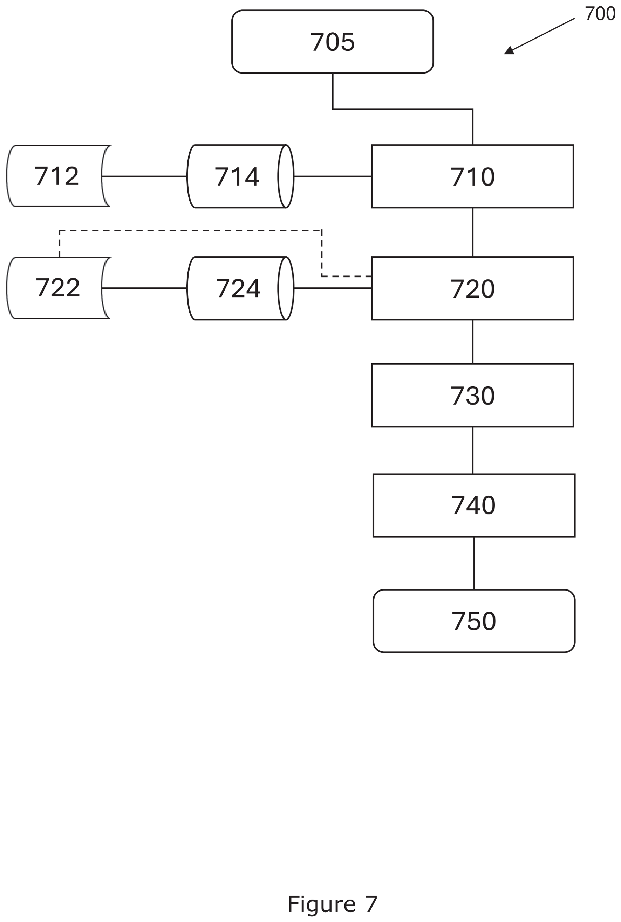

In further embodiments, an approach for assessing the performance of a communications network is provided. In some cases, this approach may alternatively be referred to as an approach for monitoring, or determining, the performance of a communications network. Assessing the performance of the network in using the process described below can also be used to assess the functionality and proper operation of the network at a given location on the communications network. This approach, illustrated by the flowchart 700 of Figure 7, combines UE location estimates (as discussed above) with UE-derived network performance indicators (for example, QoS parameters, signal strength, error rates, etc) to enable a network operator to understand the environment a particular UE 100 experiences as the UE 100 moves throughout the communications network.

In some embodiments, this approach to assessing the performance of the communications network, which begins at step 705, may be implemented by the app 136 (which may also be referred to as a "first software entity"). At step 710, the app 136 receives a location estimate 712 associated with a location of a UE communicatively connected to the communications network. The app 136 may communicate with a second software entity (or "data source"), such as a third-party app 138 or the UE's operating system (for example, Android), to obtain an estimate 712 of the UE's location made by the second software entity, instead of the app 136 recording a UE location estimate itself. The second software entity may operate independently of the first software entity (and may, in some circumstances, operate on a different UE), and may be a third-party app 138 or the UE's operating system. Estimates of the UE's location (e.g. recorded by third-party apps, such as third-party app 138) may be stored in a database 714, and the app 136 may retrieve the UE location estimate 712 from the database 714, in a similar manner to that described above with respect to step 610 of Figure 6. The third-party app 138 may retrieve the UE location estimate 712 from location-determining hardware and/or software (e.g. GPS) running on the UE 100 before storing the UE location estimate 712 in the database 714, or otherwise making the UE location estimate 712 available to the app 136.

At step 720, the approach comprises receiving one or more network performance indicators 722 each having been measured by the UE 100 and each being associated with the location of the UE 100. The app 136 may record the one or more network performance indicators 722 (such as signal strength readings) itself, or may communicate with another data source to obtain the network performance indicators 722 recorded by that data source instead of the app 136 recording network performance indicators itself. The network performance indicators 722 may be stored in a database 724, from which the app 136 retrieves or requests the network performance indicators 722. Alternatively, the app 136 may obtain the network performance indicators 722 directly from the third-party app 138 or UE's operating system, rather than from the database 724.

At step 730, the app 136 associates the network performance indicators 722 with the obtained UE location estimate 712 to form associated data. An assessment of the performance of the communications network is then made based on the associated data, for example by comparing the associated data to a performance threshold. The assessment of the performance of the communications network may be made by the app 136 itself. Alternatively, the app 136 may proceed to step 740, at which the UE-derived network performance indicators 722 and the UE location estimate 712 are outputted, reported to, or otherwise made available for retrieval by, the network operator. Alternatively, the app 136 may, at step 740, output, report, or otherwise make available for retrieval by the network operator the associated data. The assessment of the performance of the communications network may then be made by another software entity, including, but not limited to, a UE, another app, a server, a network operator's computing system, etc. In this way, a network operator can understand the environment that the UE 100 experiences, as the UE 100 moves throughout the communications network, through knowledge of the communications network performance (e.g. signal strength) received by the UE 100 at a particular time and location with the communications network. The method then terminates at step 750.

An assessment of the accuracy of the location estimate 712 may have already been made prior to the app 136 receiving the location estimate 712 at step 710. For example, the accuracy of the location estimate 712 may have already been validated by some external process. In some embodiments, the association of the network performance indicators 722 with the UE location estimate 712 may only be made based on a determination as to whether the location estimate meets one or more criteria. For example, the one or more criteria may include whether a confidence score associated with the location estimate 712 meets a confidence score threshold. The confidence score may be calculated using the methods already described above. Additionally, or alternatively, the one or more criteria may include whether a given network performance indicator (or other performance indicator associated with the location estimate 712) meets a network performance threshold that indicates proper functioning of the network. For instance, the one or more criteria may include whether a signal strength associated with the location estimate 712 meets or exceeds a signal strength threshold.

The one or more criteria may additionally or alternatively include whether a first timestamp associated with the location estimate 712 falls within a given time period threshold of a second timestamp associated with the one or more network performance indicators. For example, the time period threshold may be met if the location estimate 712 relates to a location of the UE 100 only a few seconds ago and the one or more network performance indicators 722 also relate to the performance of the network a few seconds ago. Similarly, the time period threshold may also be met if the location estimate 712 relates to a location of the UE 8 hours ago and the one or more network performance indicators 722 also relate to the performance of the network 8 hours ago (it will be appreciated that other time periods and thresholds may be selected).

In these situations, the location estimate 712 may be associated with the one or more network performance indicators 722 at step 730. In other situations, e.g. where the location estimate 712 relates to a location of the UE 8 hours ago, but the one or more performance indicators 722 relate to the performance of the network only a few seconds ago, the time period threshold may not be met and the location estimate 712 may not be associated with the network performance indicators 722 at step 730. Network operators may need to understand the environment a UE 100 is experiencing as the UE 100 moves throughout the communications network, over and above basic location information of the UE 100, in order to diagnose areas of the communications network that may be experiencing degraded performance and/or faults in order to ensure the robustness and proper functionality of the communications network. Assessing the performance of the network using the approach described above meets this aim. For example, combining network performance data taken after (potentially some significant time after) a UE location estimate is recorded, whilst still having confidence that the network performance data is valid for that UE location (despite the UE location estimate not being contemporaneous), provides for an improved method of virtual-drive testing of a communications network using crowd-sourced data that has negligible impact on UE battery life. It should be understood that reference to a "fault" above does not necessarily imply that there is a complete failure on the communications network, but that the communications network is performing sub-optimally.

Whilst the approach for assessing the performance of the communications network has been described above as being implemented by the app 136, it will be understood that the approach described above (including individual aspects thereof) may be performed by any suitable entity, including, but not limited to, a UE, an app, a server, a network operator's computing system, etc.

Any of the above discussed methods may be performed using a computer system or similar computational resource, or system comprising one or more processors and a non-transitory memory storing one or more programs configured to execute the method. Likewise, a non-transitory computer readable storage medium may store one or more programs that comprise instructions that, when executed, carry out the methods described herein. It will also be understood that the individual aspects, steps, and/or features of the processes 300 (including parallel paths 400 and 500), 600, and 700 as described above may be interchanged with one another as appropriate and as required depending on the specific implementing scenario in question.

Whilst certain embodiments have been described, these embodiments have been presented by way of example only, and are not intended to limit the scope of the application. Indeed, the novel devices, and methods described herein may be embodied in a variety of other forms; furthermore, various omissions, substitutions and changes in the form of the devices, methods and products described herein may be made without departing from the scope of the present application. The word "comprising" can mean "including" or "consisting of" and therefore does not exclude the presence of elements or steps other than those listed in any claim or the specification as a whole. The mere fact that certain measures are recited in mutually different dependent claims does not indicate that a combination of these measures cannot be used to advantage. The accompanying claims and their equivalents are intended to cover such forms or modifications as would fall within the scope of the application.

The following clauses are provided as specific examples:

1. A computer-implemented method of calculating a confidence score associated with a historical location estimate of a user equipment, UE, wherein the computer-implemented method is implemented by a first software entity, and wherein the computer-implemented method comprises:

   retrieving a historical UE location estimate, the historical UE location estimate having been provided by a second software entity;
   determining whether the historical UE location estimate meets one or more criteria associated with calculating a confidence score; and
   based on the historical UE location estimate meeting the one or more criteria, calculating a confidence score associated with the historical location estimate of the UE.

2. The computer-implemented method of clause 1, wherein the one or more criteria comprise one or both of a time threshold and a first location accuracy threshold associated with the historical UE location estimate.

3. The computer-implemented method of clause 2, wherein if both of the time threshold and the location accuracy threshold are met, the calculated confidence score is a fixed confidence score.

4. The computer-implemented method of clause 3, wherein if one of the time threshold and the location accuracy threshold is not met, the computer-implemented method further comprises:

   deriving a first geolocation identifier associated with the historical UE location estimate;
   obtaining one or more second geolocation identifiers, each second geolocation identifier being associated with a wireless device that is in communication with the UE and is at a known location; and
   if the first geolocation identifier matches one of the one or more second geolocation identifiers, the calculated confidence score is the fixed confidence score.

5. The computer-implemented method of clause 4, wherein if the first geolocation identifier does not match one of the one or more second geolocation identifiers, the computer-implemented method further comprises:

   retrieving one or more cell-site identifiers to which the UE is connected or is visible to the UE;
   deriving one or more third geolocation identifiers associated with the one or more cell-site identifiers based on the retrieved one or more cell-site identifiers; and

      if the first geolocation identifier correlates with one of the one or more third geolocation identifiers within a correlation threshold, applying a first weighting factor when calculating the confidence score; or
      if the first geolocation identifier does not correlate with the one or more third geolocation identifiers within the correlation threshold, applying a second weighting factor when calculating the confidence score, wherein the first weighting factor and the second weighting factor are different.

6. The computer-implemented method of any preceding clause, wherein if the one or more third geolocation identifiers cannot be derived, the computer-implemented method further comprises:

determining whether the historical UE location estimate meets a second location accuracy threshold; and

if the historical UE location estimate meets the location accuracy threshold, applying the first weighting factor when calculating the confidence score; or

if the historical UE location estimate does not meet the location accuracy threshold, applying the second weighting factor when calculating the confidence score.

7. The computer-implemented method of clause 6, wherein the first location accuracy threshold is the same as the second location accuracy threshold.

8. The computer-implemented method of any preceding clause, wherein the second software entity operates independently of the first software entity.

9. The computer-implemented method any preceding clause, wherein the UE comprises location-determining hardware and/or software, and wherein the second software entity retrieves the historical UE location estimate from the location determining hardware and/or software.

10. The computer-implemented method of any of clauses 1 to 8, wherein the second software entity retrieves the historical UE location estimate from storage on the UE or from an external remote server.

11. The computer-implemented method of any preceding clause, wherein the historical UE location estimate is the most recent UE location estimate recorded by the second software entity.

12. The computer-implemented method of any preceding clause, wherein the one or more criteria comprises an estimated speed of travel of the UE, and wherein the computer-implemented method further comprises calculating the confidence score based on whether the estimated speed of travel of the UE meets a speed threshold.

13. The computer-implemented method of clause 12, wherein the historical location estimate comprises:

a first historical location estimate having a first associated timestamp; and
a second historical location estimate having a second associated timestamp; and wherein the estimated speed of travel of the UE is calculated based on the first and second historical location estimates and the first and second associated timestamps.

14. The computer-implemented method of clause 12 or clause 13 when dependent on any of clauses 4 to 11, wherein:

if the estimated speed of travel of the UE does not meet the speed threshold, the method further comprises applying the first weighting factor when calculating the confidence score; or
if the estimated speed of travel of the UE meets the speed threshold, the method further comprises applying the second weighting factor when calculating the confidence score, wherein the first weighting factor and the second weighting factor are different.

15. The computer-implemented method of clause 14, wherein the computer-implemented method further comprises calculating the confidence score based on a ratio of the first weighting factor and the second weighting factor.

16. The computer-implemented method of any of clauses 12 to 15, wherein:
the estimated speed of travel of the UE is calculated by a source other than the first software entity, and the computer-implemented method further comprises:

retrieving the estimated speed of travel of the UE from a storage of the UE; or
determining the estimated speed of travel of the UE.

17. The computer-implemented method of any preceding clause, wherein the computer-implemented method further comprises periodically clearing a cache of the UE.

18. The computer-implemented method of any preceding clause, wherein the computer-implemented method further comprises reporting the confidence score to a communications network operator.

19. The computer-implemented method of any of clauses 1 to 17, wherein the computer-implemented method further comprises reporting the confidence score to a communications network operator together with the historical UE location estimate.

20. The computer-implemented method of clause 19, wherein the computer-implemented method further comprises:

retrieving historical measurement data indicative of performance of the communications network, the historical measurement data having an associated historical measurement data timestamp;
associating the historical measurement data with the historical UE location estimate if the historical measurement data timestamp and a timestamp of the historical UE location estimate fall within a common time range; and
reporting the historical measurement data to the communications network operator together with the confidence score and the historical UE location estimate.

21. The computer-implemented method of any preceding clause, wherein the first software entity is an app.

22. An app configured to perform the computer-implemented method of any of clauses 1 to 21.

23. A computer-readable medium comprising instructions that, when executed by a processor, cause the processor to perform the computer-implemented method of any of clauses 1 to 21.

## Claims

1. A computer-implemented method of assessing a performance of a communications network, the computer-implemented method comprising:

receiving a location estimate, the location estimate being associated with a location of a user equipment, UE, communicatively coupled to the communications network;
receiving one or more network performance indicators, the one or more network performance indicators each having been measured by the UE and each being associated with the location within the communications network;
associating the location estimate with the one or more network performance indicators to form associated data; and
assessing the performance of the communications network based on the associated data.

2. The computer-implemented method of claim 1, wherein the computer-implemented method is implemented by a first software entity, and wherein the location estimate is provided by a second software entity.

3. The computer-implemented method of claim 2, wherein the one or more network performance indicators are provided by the first software entity.

4. The computer-implemented method of claim 2 or claim 3, wherein the second software entity operates independently of the first software entity.

5. The computer implemented method of any of claims 2 to 4, wherein the UE comprises location-determining hardware and/or software, and wherein the second software entity retrieves the location estimate from the location determining hardware and/or software.

6. The computer-implemented method of any of claims 2 to 5, wherein the first and second software entities operate on different UEs.

7. The computer-implemented method of any preceding claim, wherein an assessment of the accuracy of the location within the communications network associated with the location estimate has previously been made.

8. The computer-implemented method of any preceding claim, wherein assessing the performance of the communications network further comprises comparing the associated data to a performance threshold.

9. The computer-implemented method of any preceding claim, wherein associating the location estimate with the one or more network performance indicators to form associated data comprises:

determining whether the location estimate meets one or more criteria; and
based on the location estimate meeting the one or more criteria, associating the location estimate with the one or more network performance indicators.

10. The computer-implemented method of claim 7, wherein the one or more criteria comprise one or more of:

a confidence score associated with the location estimate meeting a confidence score threshold;
a signal strength associated with the location estimate meeting a signal strength threshold; and
a first timestamp associated with the location estimate being within a time threshold of a second timestamp associated with the one or more network performance indicators.

11. The computer-implemented method of any preceding claim, further comprising outputting the assessed performance of the communications network to a network operator.

12. An app configured to perform the computer-implemented method of any of claims 1 to 11.

13. A computer-readable medium comprising instructions that, when executed by a processor, cause the processor to perform the computer-implemented method of any of claims 1 to 11.

Figure 1

Figure 2

300

305

310

315

380

385

Figure 3

Figure 4

300

315

355

360

365    370

375

385

Figure 5

Figure 6

Figure 7

Europäisches
Patentamt
European
Patent Office
Office européen
des brevets

**EUROPEAN SEARCH REPORT**

**Application Number**

EP 25 21 3135

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/053189 A1 (RAMAMURTHY SURYANARAYANAN [IN]) 14 February 2019 (2019-02-14) | 1-6,8, 11-13 | INV. H04W4/029 |
| Y | * paragraph [0040] * | 7,9,10 | ADD. H04W64/00 |
| Y | US 2010/324813 A1 (SUNDARARAJAN ARJUN [US] ET AL) 23 December 2010 (2010-12-23) * paragraph [0002] * | 7 | G01S19/39 G01S5/02 |
| Y | US 2018/097572 A1 (SHIBATA TAKESHI [US] ET AL) 5 April 2018 (2018-04-05) * paragraph [0110] - paragraph [0112] * | 9,10 | |
| A | US 2021/096267 A1 (JOHNS NICHOLAS PATRICK [US] ET AL) 1 April 2021 (2021-04-01) * paragraph [0002] * * paragraph [0008] * | 1-13 | |

| TECHNICAL FIELDS SEARCHED (IPC) |
|---|
| H04W G01S |

The present search report has been drawn up for all claims

| Place of search | Date of completion of the search | Examiner |
|---|---|---|
| Munich | 25 March 2026 | Emander, Andreas |

EPO FORM 1503 03.82 (P04C01)

## ANNEX TO THE EUROPEAN SEARCH REPORT
## ON EUROPEAN PATENT APPLICATION NO.

EP 25 21 3135

This annex lists the patent family members relating to the patent documents cited in the above-mentioned European search report.
The members are as contained in the European Patent Office EDP file on
The European Patent Office is in no way liable for these particulars which are merely given for the purpose of information.

25-03-2026

| Patent document cited in search report | | | Publication date | Patent family member(s) | | Publication date |
|---|---|---|---|---|---|---|
| US 2019053189 | A1 | | 14-02-2019 | US 10051594 B1 | | 14-08-2018 |
| | | | | US 10178643 B1 | | 08-01-2019 |
| | | | | US 2019053189 A1 | | 14-02-2019 |
| US 2010324813 | A1 | | 23-12-2010 | NONE | | |
| US 2018097572 | A1 | | 05-04-2018 | EP 3343241 A1 | | 04-07-2018 |
| | | | | JP 2018059932 A | | 12-04-2018 |
| | | | | US 2018097572 A1 | | 05-04-2018 |
| US 2021096267 | A1 | | 01-04-2021 | EP 3304116 A1 | | 11-04-2018 |
| | | | | EP 3869234 A1 | | 25-08-2021 |
| | | | | US 2018156925 A1 | | 07-06-2018 |
| | | | | US 2019271786 A1 | | 05-09-2019 |
| | | | | US 2021096267 A1 | | 01-04-2021 |
| | | | | US 2022357465 A1 | | 10-11-2022 |
| | | | | US 2024151803 A1 | | 09-05-2024 |
| | | | | US 2025298115 A1 | | 25-09-2025 |
| | | | | WO 2016196807 A1 | | 08-12-2016 |

EPO FORM P0459

For more details about this annex : see Official Journal of the European Patent Office, No. 12/82